# EUROPÄISCHE PATENTSCHRIFT

(11) **EP 2 260 273 B1**
(45) Veröffentlichungstag und Bekanntmachung des Hinweises auf die Patenterteilung: **26.10.2011**
(21) Anmeldenummer: 09727245.4
(22) Anmeldetag: 26.03.2009
(51) Int. Cl.: G01F 23/284

(54) **VERFAHREN ZUR BESTIMMUNG UND/ODER ÜBERWACHUNG DES FÜLLSTANDS EINES MEDIUMS IN EINEM BEHÄLTER**
METHOD FOR DETERMINING AND/OR MONITORING THE FILLING LEVEL OF A MEDIUM IN A CONTAINER
PROCÉDÉ DE DÉTERMINATION ET/OU DE SURVEILLANCE DU NIVEAU D UN FLUIDE DANS UN RÉCIPIENT

(30) Priorität: 01.04.2008 DE 102008016940
(43) Veröffentlichungstag der Anmeldung: 15.12.2010
(73) Patentinhaber: Endress+Hauser GmbH+Co. KG, 79689 Maulburg (DE)
(72) Erfinder: Endress, Klaus, CH-4153 Reinach (CH)
(74) Vertreter: Andres, Angelika Maria
(86) Internationale Anmeldenummer: PCT/EP2009/053628
(87) Internationale Veröffentlichungsnummer: WO 2009/121801

(56) Entgegenhaltungen:
- US-A1- 2006 000 275
- US-B1- 6 680 690

## Beschreibung

Die Erfindung betrifft ein Verfahren zur Bestimmung und/oder Überwachung des Füllstands eines Mediums in einem Behälter.

Radar-Messgeräte, die den Füllstand eines Mediums in einem Behälter über die Laufzeit von Mikrowellen oder Ultraschallwellen bestimmen, werden von der Anmelderin unter den Bezeichnungen MICROPILOT, LEVELFLEX und PROSONIC in unterschiedlichsten Ausgestaltungen angeboten und vertrieben. Bei diesen Messgeräten werden gepulste Messsignale von einer Signalerzeugungseinheit erzeugt und über eine Antenne in Richtung des Mediums ausgesendet. Bei dem Medium bzw. bei dem Füllgut kann es sich um ein flüssiges oder um ein festes Medium handeln.

Während Radar-Messgeräte, die unter der Bezeichnung MICROPILOT angebotenen und vertriebenen werden, hochfrequente Messsignale im GHz-Bereich frei abstrahlen, führen TDR-Messgeräte, die unter der Bezeichnung LEVELFLEX angeboten und vertrieben werden, die Messsignale entlang eines eng begrenzten Raumbereichs in den Behälter. Zur freien Abstrahlung der Mikrowellen werden Planarantennen, Horn- oder Stabantennen verwendet; im Falle der TDR-Messgeräte werden die Messsignale über einen sich in den Behälter hineinerstreckenden geeigneten Wellenleiter geführt. Bei Ultraschall-Messgeräten ist diese Unterscheidung nicht gegeben: Ultraschallwellen werden über eine Antenne stets frei in den Behälter abgestrahlt.

Physikalisch gesehen wird bei Radar-Messgeräten auf Mikrowellenbasis der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein gewisser Anteil der frei abgestrahlten oder geführten Messsignale zurück in eine Empfangsvorrichtung reflektiert wird. Der reflektierte Anteil ist dabei um so größer, je größer der Unterschied in den Dielektrizitätszahlen der beiden Medien ist. Anhand der Laufzeit der Messsignale lässt sich die Entfernung zur Grenzfläche zwischen den beiden Medien bestimmen. Bei Kenntnis der Leerdistanz des Behälters kann der Füllstand des Füllguts in dem Behälter berechnet werden. Die Auswertung der Messsignale erfolgt in einer Auswerteeinheit.

Generell nutzen Laufzeitverfahren die physikalische Gesetzmäßigkeit aus, dass die Laufstrecke gleich dem Produkt aus Laufzeit und Ausbreitungsgeschwindigkeit ist. Im Falle der Füllstandsmessung entspricht die Laufstrecke dem doppelten Abstand zwischen einem definierten Bezugspunkt, üblicherweise im Bereich der Antenne, und der Oberfläche des Mediums. Wie beispielsweise aus der EP 0 955 527 bekannt geworden ist, wird das eigentliche Nutzechosignal - also der an der Oberfläche reflektierte Anteil des Messsignals - und dessen Laufzeit anhand der sog. Echofunktion bzw. der digitalen Hüllkurve bestimmt, wobei die digitale Hüllkurve die Amplituden der reflektierten Messsignale (--> Echo-signale) als Funktion des Abstandes 'Antenne - Oberfläche des Mediums' beschreibt. Der Füllstand selbst ergibt sich dann aus der Differenz zwischen dem bekannten Abstand der Antenne von dem Boden des Behälters und dem durch die Messung bestimmten Abstand der Oberfläche des Mediums von der Antenne. Während im Falle eines Ultraschall-Messgeräts die Auswertung direkt anhand der gemessenen Echokurve erfolgt, werden die Messwerte im Falle eines Mikrowellen-Messgeräts über ein Abtastverfahren in den Niederfrequenzbereich transformiert, so dass die Auswertung der Echokurve bei einem Mikrowellen-Messgerät im Wesentlichen analog zu der Auswertung bei einem Ultraschall-Messgerät erfolgen kann.

Neben den zuvor beschriebenen Messverfahren, bei denen der Füllstand über die Laufzeit von breitbandigen gepulsten Messsignalen ermittelt wird, kommt auch das sog. FMCW-Verfahren im Bereich der Füllstandsmessung zum Einsatz. Beim FMCW-Verfahren werden kontinuierliche, frequenzmodulierte Mikrowellen in Richtung des Mediums abgestrahlt; anhand der Phasenverschiebung zwischen den abgestrahlten und den reflektierten Wellen wird der Füllstand in dem Behälter ermittelt.

Generell geht der Trend in der Messtechnik in die Richtung, Messgeräte so auszugestalten, dass sie möglichst Energie effizient arbeiten: Vierdraht-Messgeräte werden in zunehmendem Maß durch Zweidraht-Messgeräte ersetzt. Bei Zweidraht-Messgeräten erfolgen - im Gegensatz zu Vierdraht-Messgeräten - Energieversorgung und Messwertübertragung über ein und dasselbe Leitungspaar.

Zweidraht-Messgeräte müssen bezüglich ihres Leistungsbedarfs so ausgelegt sein, dass sie stets mit der Leistung betrieben werden können, die aktuell verfügbar ist. Aus der EP 1 301 914 B1 ist ein Zweidraht-Mikrowellen-Messgerät mit getakteter Messrate bekannt geworden. Bei diesem bekannten Messgerät ist die Messrate dahingehend optimiert, dass eine nachfolgende Messung immer erst dann gestartet wird, wenn ausreichend Energie für diese nachfolgende Messung zur Verfügung steht.
Aufgrund der limitierten verfügbaren Energie ist es oftmals schwierig, den Kunden Zweidraht-Messgeräte mit sog. Zusatz-Features anzubieten. Ein klassisches Beispiel für ein Zusatz-Feature ist ein beleuchtetes Display.

Aus der US-PS 6,014,100 ist ein Zweidraht-Radar-Messgerät mit konstanter Taktung der Messrate bekannt geworden, das auf den Worst Case abstellt und an der unteren Leistungsgrenze arbeitet: Die konstante Taktrate ist über den gesamten Messbereich so ausgelegt, dass im Falle der minimal zur Verfügung stehenden Leistung, also bei einem 4mA-Signal, sichergestellt ist, dass ausreichend Leistung für die nächste Messung vorhanden ist.
Es versteht sich von selbst, dass es auch bei dieser bekannten Lösung problematisch ist, den Kunden Zusatz-Features zur Verfügung zu stellen. Darüber hinaus ist ein Zweidraht-Messgerät mit konstanter Messrate gegenüber einem Messgerät mit variabler Messrate den Nachteil, dass es nahezu über den gesamten Messbereich eine verringerte Messgenauigkeit auf. Neben den Zweidraht-Messgeräten, die pro Zeiteinheit nur eine begrenzte Energie zur Verfügung haben, rücken in der Messtechnik zunehmend Energie autarke Messgeräte in den Fokus. Unter dem Begriff 'Energie autarke Messgeräte' werden im Zusammenhang mit dem erfindungsgemäßen Verfahren Messgeräte subsumiert, die keine drahtgebundenen Leitungen zu einer wie auch immer gearteten entfernten Energiequelle aufweisen. Energie autarke Messgeräte werden z.B. über mindestens eine Batterie, über Funk, über Solarzellen oder Brennstoffzellen mit Energie versorgt. Damit die Betriebsdauer, z.B. der Batterie, möglichst hoch ist, sollten die Messgeräte so ausgestaltet sein, dass sie einen möglichst geringen Leistungsverbrauch haben.

Bekannte Radar-Messgeräte arbeiten kontinuierlich: Sie liefern Füllstandswerte unabhängig davon, ob eine Füllstandsänderung in dem Behälter stattfindet oder nicht. Im Prinzip ist dies in einer Vielzahl von Anwendungen nicht anderes als pure Verschwendung von Energie.

Der Erfindung liegt die Aufgabe zugrunde, ein Verfahren vorzuschlagen, das ein Energie optimiertes Betreiben eines Radar-Messgeräts ermöglicht.

Die Aufgabe wird dadurch gelöst, dass von dem Messgerät Messsignale von einer Position oberhalb des maximalen Füllstands des Füllguts in dem Behälter mit einer variablen Messrate in Richtung der Oberfläche des Füllguts ausgesendet bzw. geleitet werden, dass die Messrate in Abhängigkeit von der Änderung des Füllstandes des Füllguts in dem Behälter variiert wird, dass die an der Oberfläche des Füllguts reflektierten Messsignale in einer Position oberhalb des maximalen Füllstandes des Füllguts in dem Behälter empfangen werden, und dass anhand der Laufzeit der Messsignale bzw. der reflektierten Messsignale der Füllstand des Füllguts in dem Behälter bestimmt und/oder überwacht wird.

Wie bereits zuvor beschrieben, ist das erfindungsgemäße Verfahren bevorzugt in Verbindung mit einem Zweidraht-Messgerät oder mit einem Energie autarken Messgerät, das mittels einer Batterie oder mittels vergleichbarer Stromquellen betrieben wird, einsetzbar.

Im Falle eines Zweidraht-Messgeräts kann beispielsweise während der messfreien Zeiträume ein Energiespeicher gefüllt werden und/oder die überschüssige Energie kann beispielsweise für die Realisierung eines Zusatzfeatures des Messgeräts verwendet werden. Auch kann die überschüssige Energie für ein Feldgerät genutzt werden, das zur Ermittlung der sekundären Kenngröße dient. Im Falle eines Energie autarken Messgeräts liegt der Vorteil auf der Hand: Aufgrund der Energieeinsparung wird die Standzeit der Energiequelle, z.B. der Batterie, erhöht.

Das erfindungsgemäße Verfahren kann z.B. bei einem Energie autarken Radar-Messgerät zur Füllstandsmessung in einem Tank oder Silo eingesetzt werden, wenn die entsprechende Prozessanlage diskontinuierlich betrieben wird. Energie autarke Radar-Messgeräte bieten sich natürlich auch in Prozessanlgen mit unterirdisch positionierten, schwer zugänglichen Tanks oder Silos an. Das Silo kann beispielsweise als Getreidespeicher und der Tank als Treibstofflager verwendet werden. Generell werden Energie autarke Messgeräte immer dann eingesetzt, wenn eine Verkabelung sehr aufwändig und kostenintensiv ist.

Gemäß einer vorteilhaften Weiterbildung des erfindungsgemäßen Verfahrens ist vorgesehen, dass das Messgerät in einen Sleep-Mode versetzt wird, wenn in dem Behälter keine Änderung des Füllstands erfolgt. Alternativ hierzu wird vorgeschlagen, dass die Messrate des Messgeräts gegen Null gefahren wird, wenn in dem Behälter keine Änderung des Füllstands erfolgt.

Als besonders vorteilhaft wird es im Zusammenhang mit dem erfindungsgemäßen Verfahren erachtet, wenn die Messrate funktional abhängig ist von der Änderung des Füllstands in dem Behälter. Insbesondere ist die Messrate minimal bei einer minimalen Änderung des Füllstands - wenn die Änderung des Füllstands also Null ist oder gegen Null geht - und maximal bei einer maximalen Änderung des Füllstands. Neben der Energieeinsparung wird zusätzlich erreicht, dass die Messgenauigkeit bei sich änderndem Füllstand stets der Spezifikation entspricht. Prinzipiell ist es auch möglich, das Messgerät in zwei Modi zu betreiben: einem Mode mit langsamer Messrate, wenn sich der Füllstand in dem Behälter nicht oder langsam ändert, und einem Mode mit einer schnellen Messrate, wenn sich der Füllstand in dem Behälter kontinuierlich ändert.

Gemäß einer vorteilhaften Weiterbildung des erfindungsgemäßen Verfahrens wird als Indiz für eine Änderung des Füllstands eine sekundäre Kenngröße herangezogen; bevorzugt wird die sekundäre Kenngröße von einem Feldgerät geliefert, das eine Änderung des Füllstands direkt oder indirekt ermittelt. Als Beispiele für sekundäre Kenngröße sind das Anfahren eines Transportbandes oder einer Pumpe und/oder die Pumpleistung der Pumpe und/oder der von einem Durchflussmessgerät gemessene Durchfluss beim Befüllen oder Entleeren des Behälters zu nennen. Als besonders vorteilhaft wird es in Verbindung mit dem vorliegenden Verfahren angesehen, wenn ein Schaltelement, das energielos betrieben werden kann, die sekundäre Kenngröße liefert. So kann beispielsweise durch das Anlaufen des Transportbandes oder der Pumpe ein mechanischer Schalter betätigt werden, der ein Signal an das Messgerät bzw. die das Messgerät steuernde Regel-/Auswerteeinheit absetzt.

Weiterhin ist gemäß einer vorteilhaften Ausgestaltung des erfindungsgemäßen Verfahrens vorgesehen, dass die Messrate in Abhängigkeit von der Höhe des Füllstands in dem Behälter variiert und um so größer ist, je geringer der Abstand der Oberfläche des Füllguts von dem Messgerät ist. Hierdurch wird die Messrate in einem kritischen Bereich, in dem die Gefahr des Überlaufens des Behälters besteht, erhöht.

Additiv oder alternativ ist vorgesehen, dass die Messrate in Abhängigkeit von der Höhe des Füllstands in dem Behälter variiert und größer wird, wenn der Abstand der Oberfläche des Füllguts von dem Boden des Behälter einen vorgegebenen minimalen Wert unterschreitet. Hierdurch soll beispielsweise der Leerlauf einer nachgeschalteten Pumpe vermieden werden.

Wie bereits an vorhergehender Stelle erwähnt, handelt es sich bei den Messsignalen um Messsignale aus dem Mikrowellen, Schallwellen- oder Ultraschallwellen-Bereich.

Die Erfindung wird anhand der nachfolgenden Figuren näher erläutert. Es zeigt:
Fig. 1: eine schematische Darstellung einer Prozessanlage, bei der das erfindungsgemäße Verfahren zur Füllstandsmessung und/oder Füllstandsüberwachung zum Einsatz kommt.
Fig. 2: eine alternative schematische Darstellung einer Prozessanlage, bei der das erfindungsgemäße Verfahren zur Füllstandsmessung und/oder Füllstandsüberwachung zum Einsatz kommt.

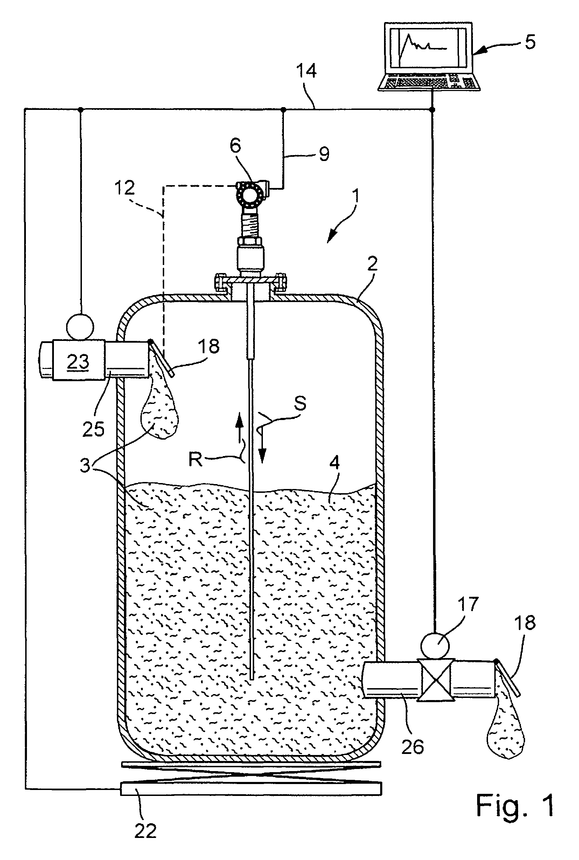

Fig. 1 zeigt eine schematische Darstellung einer Prozessanlage, bei der das erfindungsgemäße Verfahren zur Füllstandsmessung und/oder Füllstandsüberwachung zum Einsatz kommt.

In dem Behälter 2 ist das Füllgut 3 gelagert. Am Deckel des Behälters 3 oberhalb des maximal möglichen Füllstands ist ein TDR-Messgerät 1 mit einem Vorort-Display 9 in einem Stutzen montiert. Bei dem Messgerät 1 handelt es sich um ein Zweidraht-Messgerät. Es versteht sich jedoch von selbst, dass das erfindungsgemäße Verfahren auch bei einem Vierdraht-Messgerät anwendbar ist.

Wie bereits an vorhergehender Stelle beschrieben, werden hochfrequenten Messsignale S über einen Wellenleiter in Richtung des Füllguts 3 geführt; die an der Oberfläche 4 des Füllguts 3 reflektierten Echosignale R werden mittels des Wellenleiters in Richtung des Messumformers 6 zurückgeführt. Anhand der Laufzeit der Messsignale S / Echosignale R ermittelt eine in dem Messumformer 6 angeordnete, in Fig. 1 nicht gesondert dargestellte Regel-/Auswerteeinheit den Füllstand des Füllguts 3 in dem Behälter 2.

Erfindungsgemäß werden die Messsignale im Falle eines TDR-Messgeräts 1 mit einer variablen Messrate in Richtung der Oberfläche 4 des Füllguts 3 geführt, wobei die Messrate in Abhängigkeit von der Änderung des Füllstandes des Füllguts 3 in dem Behälter 2 variiert wird. Nach erfolgter Messung wird die Auswertung der Echokurve bzw. der Hüllkurve und die Bestimmung des Füllstands in bekannter Weise durchgeführt. Da das Messgerät 1 erfindungsgemäß nur aktiviert wird, wenn aktuell eine Füllstandsänderung erfolgt, kommt es - beispielsweise im Falle von Lagertanks, die nur sporadisch befüllt und entleert werden - zu ganz erheblichen Energieeinsparungen.

Wie in den bevorzugten Ausgestaltungen des erfindungsgemäßen Verfahrens beschrieben, wird die Information, ob aktuell eine Füllstandsänderung auftritt oder ob der Füllstand einen konstanten Wert inne hat, mittels einer sekundären Kenngröße ermittelt. Diese sekundäre Kenngröße kann entweder indirekter Natur sein, d.h. sie wird von einem Schalter 19 geliefert, der während des Befüllungs- oder Entleerungsprozesses mit dem Medium 3 in Kontakt kommt, oder sie kann direkter Natur sein, das heißt sie wird von einem weiteren, in die Prozessanlage eingebauten Felgerät geliefert.

In der Fig. 1 sind unterschiedliche Feldgeräte skizziert, die in den Befüll- bzw. Entleerprozess involviert sind und die dem Messgerät 1 Information hinsichtlich der sekundären Kenngröße bereitstellen können. Im einfachsten Fall wird mechanisch und energielos eine Klappe 18 am Einlauf 25 bzw. am Auflauf 26 des Behälters 2 betätigt, sobald der Behälter 2 mit einem Füllgut 3 befüllt bzw. sobald Füllgut 3 aus dem Behälter 2 entnommen wird. Durch die Betätigung der Klappe 18 und des Schalters 19 wird ein Schaltsignal an den Messumformer 6 des TDR-Messgeräts 1 gesendet. Das beispielsweise im Sleep Mode verharrende Messgerät 1 startet daraufhin unmittelbar die Messung. Schließt sich die Klappe 18 am Ende des Befüllvorgangs, wird wiederum ein Schaltsignal an das Messgerät 1 abgesetzt, das daraufhin seine Messaktivitäten einstellt.

Die sekundäre Kenngröße, die anzeigt, ob sich in dem Behälter 2 der Füllstand ändert oder nicht, kann darüber hinaus additiv oder alternativ von dem Durchflussmessgerät 23, dem Wiegesensor 22 oder von dem Ventil 17 geliefert werden.

Die Gesamtsteuerung der Anlage erfolgt im dargestellten Fall über die entfernt angeordnete Kontrollstelle 5. Die Kommunikation mit der Kontrollstelle erfolgt digital über eines der bekannten Feldbus-Protokolle, z.B. Fieldbus Foundation, HART oder Profibus PA.

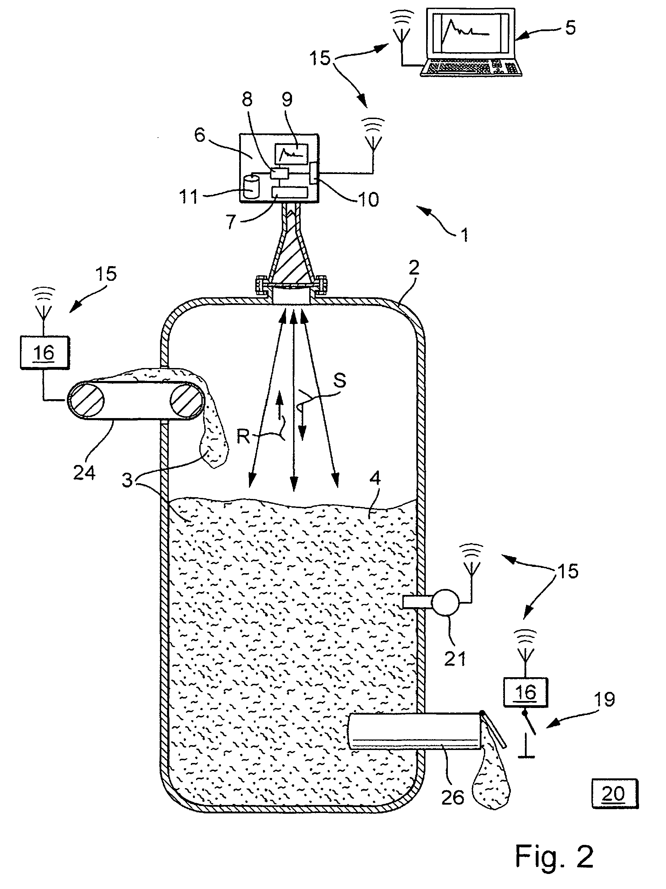

Fig. 2 zeigt eine alternative schematische Darstellung einer Prozessanlage, bei der das erfindungsgemäße Verfahren zur Füllstandsmessung und/oder Füllstandsüberwachung zum Einsatz kommt.
Ein wesentliches Unterscheidungsmerkmal zu der in Fig. 1 gezeigten Prozessanlage besteht darin, dass es sich bei den einzelnen in der Prozessanlage integrierten Feldgeräten, insbesondere jedoch bei dem Radar-Messgerät 1, um Energie autarkes Messgerät 1 handelt. Folglich wird das Radar-Messgerät 1 drahtlos betrieben und über eine in dem oder an den Messumformer 6 implementierte oder adaptierte Energiequelle, z.B. eine Batterie11, mit der für den Messbetrieb erforderlichen Energie versorgt.

Das Radar-Messgerät 1 strahlt die Ultraschall-Messsignale oder die Mikrowellen-Messsignale frei in den Behälter 2 in Richtung der Oberfläche 4 des Füllguts 3 ab. Wie im zuvor beschriebenen Fall wird auch hier die Information über eine Füllstandsänderung in dem Behälter 2 anhand von zumindest einem Feldgerät geliefert, das die sekundäre Kenngröße bereitstellt. Die sekundäre Kenngröße wird beispielsweise von dem anlaufenden oder gestoppten Förderband 26 am Einlauf 25 des Behälters 3 geliefert. Alternativ wird die sekundäre Kenngröße bei Betätigung der Klappe 18 und des Schalters 19 am Auslauf 26 des Behälters bereitgestellt. Als weitere Alternative ist ein Drucksensor 21 gezeigt, der die sekundäre Kenngröße und damit die Information über eine Füllstandsänderung in dem Behälter 2 erkennbar macht. Die Übertragung der sekundären Kenngröße an das Radar-Messgerät 1 erfolgt - wie bereits zuvor erwähnt - drahtlos. Hierzu sind an dem Radar-Messgerät 1 und an den Feldgeräten, die die sekundäre Kenngröße bereit stellen, Funkschnittstellen 10 bzw. Funkmodule 15, 16 vorgesehen. Sobald das Radar-Messgerät 1 von einem der Feldgeräte die Information erhält, dass in dem Behälter 2 eine Füllstandsänderung stattfindet, nimmt das Radar-Messgerät 1 umgehend den Messbetrieb auf. Bevorzugt wird die Information über den Füllstand an eine entfernte Kontrollstelle 5 ebenfalls per Funk - hierzu dienen die Funkantennen 15 - übermittelt.

### Bezugszeichenliste

| | |
|---|---|
| 1 | Radar-Messgerät |
| 2 | Behälter |
| 3 | Medium, Füllgut |
| 4 | Oberfläche |
| 5 | Steuereinheit |
| 6 | Messumformer |
| 7 | Sende-/Empfangseinheit |
| 8 | Regel-/Auswerteeinheit |
| 9 | Eingabe-/Anzeigeeinheit |
| 10 | Funkschnittstelle |
| 11 | Energiespeichereinheit |
| 12 | Signalleitung |
| 13 | Feldbus |
| 14 | Zweidrahtleitung |
| 15 | Funkantenne, drahtlose Verbindung |
| 16 | Funkmodul |
| 17 | Ventil |
| 18 | Klappe |
| 19 | Schalter |
| 20 | Pumpe |
| 21 | Drucksensor |
| 22 | Wiegesensor |
| 23 | Durchflusssensor |
| 24 | Transportband |
| 25 | Einlauf |
| 26 | Auslauf |
| | |
| S | Sendesignal des Messsignals |
| R | Reflexionssignal des Messsignals |

## Patentansprüche

1. Verfahren zur Bestimmung und/oder Überwachung des Füllstands eines Mediums (3) in einem Behälter (2) mittels eines Messgeräts (1),
wobei von dem Messgerät (1) Messsignale von einer Position oberhalb des maximalen Füllstands des Füllguts (3) in dem Behälter (2) mit einer variablen Messrate in Richtung der Oberfläche des Füllguts (3) ausgesendet bzw. geführt werden,
wobei die Messrate in Abhängigkeit von der Änderung des Füllstandes des Füllguts (3) in dem Behälter (2) variiert wird,
wobei die an der Oberfläche (4) des Füllguts (3) reflektierten Messsignale in einer Position oberhalb des maximalen Füllstandes des Füllguts (3) in dem Behälter (2) empfangen werden, und
wobei anhand der Laufzeit der Messsignale bzw. der reflektierten Messsignale der Füllstand des Füllguts (3) in dem Behälter (2) bestimmt und/oder überwacht wird.

2. Verfahren nach Anspruch 1,
wobei das Messgerät (1) in einen Sleep-Mode versetzt wird, wenn in dem Behälter (2) keine Änderung des Füllstands erfolgt.

3. Verfahren nach Anspruch 1,
wobei die Messrate des Messgeräts (1) gegen Null gefahren wird, wenn in dem Behälter (2) keine Änderung des Füllstands erfolgt.

4. Verfahren nach Anspruch 1,
wobei die Messrate funktional abhängig ist von der Änderung des Füllstands in dem Behälter (2) und
wobei die Messrate minimal ist bei einer minimalen Änderung des Füllstands und maximal bei einer maximalen Änderung des Füllstands.

5. Verfahren nach einem oder mehreren der vorhergehenden Ansprüche,
wobei als Indiz für eine Änderung des Füllstands eine sekundäre Kenngröße herangezogen wird, und
wobei die sekundäre Kenngröße von einem Feldgerät(17, 18, 19, 20, 21, 22, 23, 24, 25, 26) geliefert wird, das eine Änderung des Füllstands indirekt ermittelt.

6. Verfahren nach Anspruch 5,
wobei als sekundäre Kenngröße das Anfahren einer Pumpe (20) und/oder die Pumpleistung der Pumpe (20) und/oder der von einem Durchflussmessgerät (23) gemessene Durchfluss beim Befüllen oder Entleeren des Behälters (2) herangezogen wird.

7. Verfahren nach einem oder mehreren der vorhergehenden Ansprüche,
wobei die Messrate in Abhängigkeit von der Höhe des Füllstands in dem Behälter (2) variiert und um so größer ist, je geringer der Abstand der Oberfläche (4) des Füllguts (3) von dem Messgerät (1) ist.

8. Verfahren nach Anspruch 7,
wobei die Messrate in Abhängigkeit von der Höhe des Füllstands (3) in dem Behälter (2) variiert und größer wird, wenn der Abstand der Oberfläche (4) des Füllguts (3) von dem Boden des Behälters (2) einen vorgegebenen minimalen Wert unterschreitet.

9. Verfahren nach einem oder mehreren der vorhergehenden Ansprüche,
wobei die Information, die die sekundäre Kenngröße beinhaltet, einer übergeordneten Steuereinheit (5; 6) zugeführt wird, die das Messgerät (1) steuert.

10. Verfahren nach einem oder mehreren der Ansprüche 1-9,
wobei als Messsignale Mikrowellen, Schall- oder Ultraschallwellen verwendet werden.

## Claims

1. Method for determining and/or monitoring the level of a medium (3) in a container (2) using a measuring device (1),
wherein the measuring device (1) emits or guides measuring signals from a position above the maximum level of the medium (3) in the container (2) in the direction of the surface of the medium (3) at a variable measurement rate,
wherein the measurement rate varies depending on the change of the level of the medium (3) in the container (2),
wherein the measuring signals reflected at the surface (4) of the medium (3) at a position above the maximum level of the medium (3) in the container (2) are received and
wherein the level of the medium (3) in the container (2) is determined and/or monitored on the basis of the time-of-flight of the measuring signals or the reflected measuring signals.

2. Method as claimed in Claim 1,
wherein the measuring device (1) is set to sleep mode if the level of the product in the container (2) does not change.

3. Method as claimed in Claim 1,
wherein the measuring rate of the measuring device (1) approaches zero if the level of the product in the container (2) does not change.

4. Method as claimed in Claim 1,
wherein the measuring rate is functionally dependent on the change of the level in the container (2) and
wherein the measuring rate is at a minimum rate when there is a minimum change in the level and at a maximum rate when there is a maximum change in the level.

5. Method as claimed in one or more of the previous claims,
wherein a secondary characteristic is used as an indicator for a change in the level and
wherein the secondary characteristic is supplied by a field device (17, 18, 19, 20, 21, 22, 23, 24, 25, 26) which indirectly measures a change in the level.

6. Method as claimed in Claim 5,
wherein a pump (20) starting up and/or the pumping capacity of the pump (20) and/or the flow measured by a flowmeter (23) when the container (2) is filled or emptied serves as the secondary characteristic.

7. Method as claimed in one or more of the previous claims,
wherein the measuring rate varies depending on the level of the medium in the container (2) and is higher the smaller the distance of the surface (4) of the medium (3) from the measuring device (1).

8. Method as claimed in Claim 7,
wherein the measuring rate varies depending on the level of the medium (3) in the container (2) and becomes higher if the distance of the surface (4) of the medium (3) from the bottom of the container (2) drops below a predefined minimum value.

9. Method as claimed in one or more of the previous claims, wherein the information which the secondary characteristic contains is supplied to a higher-order control unit (5; 6) which controls the measuring device (1).

10. Method as claimed in one or more of the Claims 1-9,
wherein microwaves, sonic waves or ultrasonic waves are used as the measuring signals.

## Revendications

1. Procédé destiné à la détermination et/ou la surveillance du niveau d'un produit (3) dans un réservoir (2) au moyen d'un appareil de mesure (1),
pour lequel des signaux de mesure sont émis ou acheminés en direction de la surface du produit (3) par l'appareil de mesure (1) à partir d'une position supérieure au niveau maximal du produit (3) dans le réservoir (2), avec une vitesse de mesure variable, pour lequel la vitesse de mesure varie en fonction du changement de niveau du produit (3) dans le réservoir (2),
pour lequel les signaux de mesure réfléchis à la surface (4) du produit (3) sont reçus dans une position supérieure au niveau maximal du produit (3) dans le réservoir (2), et pour lequel le niveau du produit (3) dans le réservoir (2) est déterminé et/ou surveillé sur la base du temps de propagation des signaux de mesure ou des signaux de mesure réfléchis.

2. Procédé selon la revendication 1,
pour lequel l'appareil de mesure (1) est placé dans un mode veille lorsqu'aucun changement de niveau n'intervient dans le réservoir (2).

3. Procédé selon la revendication 1,
pour lequel la vitesse de mesure de l'appareil de mesure (1) est amenée vers zéro lorsqu'aucun changement de niveau n'intervient dans le réservoir (2).

4. Procédé selon la revendication 1,
pour lequel la vitesse de mesure dépend de manière fonctionnelle du changement de niveau dans le réservoir (2) et
pour lequel la vitesse de mesure est minimale en cas de changement minimal du niveau et maximale en cas de changement maximal du niveau.

5. Procédé selon l'une ou plusieurs des revendications précédentes,
pour lequel il est fait appel à une valeur caractéristique secondaire comme indice pour un changement de niveau et
pour lequel la valeur caractéristique secondaire est fournie par un appareil de terrain (17, 18, 19, 20, 21, 22, 23, 24, 25, 26), qui détermine indirectement un changement de niveau.

6. Procédé selon la revendication 5,
pour lequel il est fait appel, comme valeur caractéristique secondaire, au démarrage d'une pompe (20) et/ou à la puissance de la pompe (20) et/ou au débit mesuré par un débitmètre (23) lors du remplissage ou du vidage du réservoir (2).

7. Procédé selon l'une ou plusieurs des revendications précédentes,
pour lequel la vitesse de mesure varie en fonction de la hauteur du niveau dans le réservoir (2) et est d'autant plus grande que la distance de la surface (4) du produit (3) est faible par rapport à l'appareil de mesure (1).

8. Procédé selon la revendication 7,
pour lequel la vitesse de mesure varie en fonction de la hauteur du niveau dans le réservoir (2) et est d'autant plus grande que la distance de la surface (4) du produit (3) atteint une valeur minimale prédéfinie par rapport au fond du réservoir (2).

9. Procédé selon l'une ou plusieurs des revendications précédentes,
pour lequel l'information, que contient la valeur caractéristique secondaire, est acheminée à une unité de commande maître (5, 6), qui pilote l'appareil de mesure (1).

10. Procédé selon l'une ou plusieurs des revendications 1 à 9,
pour lequel des micro-ondes, des ondes sonores ou des ondes ultrasonores sont utilisées comme signaux de mesure.
